# EUROPEAN PATENT SPECIFICATION

(11) **EP 3 321 838 B1**
(45) Date of publication and mention of the grant of the patent: **17.07.2019**
(21) Application number: 16002408.9
(22) Date of filing: 14.11.2016
(51) Int. Cl.: G06Q 20/32, G06F 21/50, G06Q 20/34

(54) **JAVA CARD PLATFORM AND APPLET SECURITY**
JAVA-KARTENPLATTFORM UND APPLET-SICHERHEIT
PLATE-FORME DE CARTE JAVA ET SÉCURITÉ D'APPLET

(43) Date of publication of application: 16.05.2018
(73) Proprietor: Giesecke+Devrient Mobile Security GmbH, 81677 München (DE)
(72) Inventor: Mantri, Deepen, 81371 München (DE); Gibis, Oliver, 81825 München (DE)

(56) References cited:
- EP-A1- 2 009 565
- EP-A2- 1 993 055
- US-A1- 2015 058 213

## Description

### Field of the invention

The present invention relates to Java Card platform based embedded devices such as smart card processor devices of either smart card form factor or other form factor than card, particularly SIM cards (SIM = subscriber identity module), embedded SIMs, payment cards, identity cards, all of them incorporation a Java Card platform.

### Background of the invention

Embedded devices hold a runtime environment that can be run on the device, and applets that provide to a user of the device applet specific services. E.g. payment applets provide payment services, SIM applets provide mobile network specific services, identity applets provide identity services, etc..

A Java Card applet is installed into a Java Card embedded device in that a Java Card CAP file - containing applet code and further contents required for applet installation - is loaded into the device, and subsequently the content of the CAP file is proceeded in the device so as to instantiate in the device an applet instance.

Embedded devices are susceptible to various hardware attacks such as light attacks wherein operation of a processor is perturbed by a light flash, resulting in malfunctions such as erroneous jumps in program execution flow, skipping of program code commands or skipping of program counters to forbidden memory areas. This also holds for embedded devices having a Java card platform underlying.

The Java Card platform provides a variety of operating system specific security features effective against hardware attacks. One known feature is to insert redundancy to ascertain data integrity. Herein, some software code parts or some operations are executed two or several times, and the results of the two or several executions are compared. As an indicator of data integrity, equal results are expected in case of no hardware attack occurring. Further regular operation of the device is allowed only if the two or several results are equal. In case the results differ, a data integrity error is assumed, and further regular operation is prohibited. A further known security feature against hardware attacks is de-synchronization wherein random delays are inserted into the execution flow of software code. A further feature is an applet firewall provided by the JavaCard Platform and separating execution contexts of different applets from each other.

On the other hand, applets provide applet specific security features. One such feature is transaction atomicity so as to assure data integrity on an applet basis. Herein, in a program flow, a result of a transaction is accepted for the further program flow only in the case the entire transaction has been executed. Otherwise a data integrity error due to only partial code execution on applet basis is detected (or assumed), and a previously present result or a standard result is used. A further feature is the inclusion of cryptographic classes that offer cryptographic services such as signature and authentication functions to CAP files and other elements.

Platform and applet security features exists in parallel and rather independently to each other. Hardware attacks can, as was mentioned before, lead to erroneous jumps in program execution flow. This might have an effect that a program counter running in a context of an applet jumps into a different applet's context, thus an applet based effect. The platform may have detected the attack. The applet has no means of being noticed of a hardware attack detected by the Java Card platform, even though a notice of the platform to the applet might make sense. On the other hand, it might make sense that an applet instructs the Java Card platform to enhance platform based security measures upon detection of a jump in program execution flow.

### Objective of the invention

It is an object of the present invention to provide a means to enhance the overall security features of a Java Card technology embedded device including both platform security features and applet security features.

### Summary of the invention

The object of the invention is achieved by an embedded device with the following features, according to claim 1. Embodiments of the invention are presented in dependent claims.

The embedded device of claim 1 incorporates Java Card technology including a Java Card platform and at least one applet, and includes both Java Card platform security features and applet security features. In the device of claim 1, in reaction to a received threat notification, a communication channel between the Java Card platform and the applet is established, or a present channel is used or activated. Via the channel, threat information on the detected event of threat is exchanged between the platform and the applet. The threat information communication channel enables the Java Card platform and the applet to align their security features with each other and thus to optimize scheduling and use of overall available security features of the device.

Thus, by means of the features of the invention, the overall security features of the embedded device are enhanced.

In detail, the inventive solution is achieved by a threat detection means and an interface means cooperating with each other. The threat detection means is installed with either one or both of the Java Card platform and the applet and is constructed to detect events of threat occurring at the embedded device. The interface means is constructed to receive, from the threat detection means, a threat notification on a detected event of threat. In reaction to a received threat notification, the interface means establishes or takes into operation or operates or otherwise uses a (possibly previously established) communication channel between the Java Card platform and the applet and exchanges threat information on the detected event of threat between the Java Card platform and the applet.

According to embodiments of the invention, said interface means is an Application Programing Interface API, particularly a proprietary API especially established for events of threat, or alternatively a standard API in combination with specific parameter values indicative of events of threat.

Also according to embodiments of the invention, said interface means is an exception mechanism agreed upon between the Java Card platform and the at least one applet.

According to further embodiments of the invention, said communication channel is constructed as either one of: (1) a unidirectional communication channel from the Java Card platform to the applet; (2) a unidirectional communication channel from the applet to the Java Card platform; (3) a bidirectional communication channel between the Java Card platform and the applet.

According to further embodiments of the invention, the threat information exchanged between the Java Card platform and the applet comprises a threat type information indicating a type of the detected event of threat. Particularly, the threat type information may comprise one or several of: a light flash attack detected at the platform, a data integrity error detected at the applet or at the platform, a bytecode jump detected at the applet, an execution flow control error detected at the applet or at the platform.

According to further embodiments of the invention, the threat information exchanged between the Java Card platform and the applet comprises or is accompanied by at least one command including instructions to establish or change security features. The command can be either a command from the Java Card platform to the applet, and can include instructions to establish or change applet security features. Alternatively, the command can be a command from the applet to the Java Card platform, and can include instructions to establish or change Java Card platform security features. By these embodiments, the Java Card platform and the applet can take influence on the security features of the respective other party. Hence, an optimized adaption of both Java Card platform and applet security features, taking into account the other party's security requirements, can be pursued or achieved.

### Brief description of the drawings

Embodiments of the invention will now be described with reference to the accompanying drawings, throughout which like parts are referred to by like references, and in which represents:

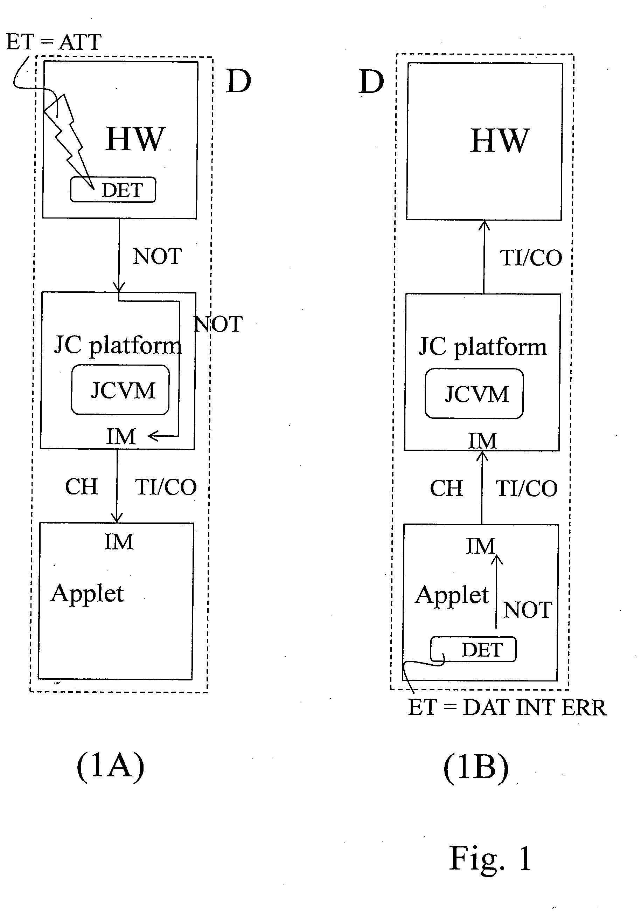

- Fig. 1: (A) An embedded device communicating an event of threat via an interface means from a Java Card platform to an applet, according to an embodiment of the invention;
(B) The embedded device of (A) communicating an event of threat via the interface means from the applet to the Java Card platform, according to an embodiment of the invention.

### Detailed description of the invention

Fig. 1A shows an embedded device D communicating an event of threat ET via an interface means IM from a Java Card JC platform to an applet, according to an embodiment of the invention. The embedded device D comprises a Java Card JC platform including a Java Card Virtual Machine JCVM, hardware HW with which the JC platform can communicate and an applet. The device D can comprise several applets. The hardware HW comprises a threat detection means DET incorporated as a light sensor installed to detect attacks ATT via light flashes and the like. The JC platform and the applet each comprise a respective part of an interface means IM between the JC platform and the applet. The interface means IM can e.g. be an application programming interface API (proprietary or standard in combination with specific parameters) or an exception mechanism.

In the communication event of Fig. 1A, the light sensor DET of the embedded device D detects a light flash attack ATT as an event of threat ET and reports it to the JC platform in a notification NOT. The JC platform internally forwards the notification NOT to the interface means IM. The interface means IM interprets the income of the treat notification NOT as a trigger to build up or activate a communication channel to the corresponding interface means IM part in the applet. Via the communication channel CH, the JC platform sends threat information TI to the applet, comprising for example a threat type or threat reason information that a light attack has occurred and been detected at the device D. The currently active applet instance now has a chance to decide on changing or adapting its own security features, e.g. to activate additional security features. In addition or alternatively, the JC platform can communicate to the applet, via the communication channel CH, commands CO to be executed on the currently active applet instance.

Fig. 1B shows the embedded device of Fig. 1A communicating an event of threat via the interface means from the applet to the Java Card platform, according to an embodiment of the invention. The method of Fig. 1B can be seen independently of that of Fig. 1A or as a complementing method to that of Fig. 1A.

In the communication event of Fig. 1B, a threat detection means DET of the applet, e.g. an integrity check subroutine or method, detects, as an event of threat ET, a data integrity error DAT INT ERR. The data integrity error DAT INT ERR might particularly be a result of a light attack ATT as that of Fig. 1A. The applet sends a notification NOT on the detected event of threat ET to its own interface means IM part. The interface means IM interprets the income of the treat notification NOT as a trigger to build up or activate a communication channel to the corresponding interface means IM part in the JC platform. Via the communication channel CH, the applet sends threat information TI to the JC platform, comprising the information that a light attack has occurred and been detected at the device D. The JC platform now has a chance to decide on changing or adapting its own security features, e.g. to activate additional security features. Particularly, the JC platform can decide to temporarily or permanently change, e.g. upgrade the security level of the currently active applet instance. Further, the applet can send to the JC platform, via the communication channel CH, with the threat information TI, commands CO to be executed on the JC platform, such as halt execution of the currently active applet instance by action of the JC platform, or switch applet execution to a different, safer mode, or switch execution context from currently active applet to error routine, and similar commands CO.

## Claims

1. An embedded device (D) incorporating Java Card technology including a Java Card platform and at least one applet, and including both Java Card platform security features and applet security features, comprising:
a) a threat detection means (DET), installed with either or both of the Java Card platform and the at least one applet, and constructed to detect events of threat (ET) occurring at the embedded device (D); and **characterized by**
b) an interface means (IM) constructed to:
- receive, from the threat detection means (DET), a threat notification (NOT) on a detected event of threat (ET); and,
- in reaction to a received threat notification (NOT), establish or operate a communication channel (CH) between the Java Card platform and the at least one applet and exchange threat (TI) information on the detected event of threat (ET) between the Java Card platform and the at least one applet.

2. The embedded device (D) according to claim 1, wherein said interface means (IM) is an Application Programing Interface API.

3. The embedded device (D) according to claim 2, wherein said Application Programing Interface API is a proprietary API especially established for events of threat.

4. The embedded device (D) according to claim 2, wherein said Application Programing Interface API is a standard API in combination with specific parameter values indicative of events of threat.

5. The embedded device (D) according to claim 1, wherein said interface means (IM) is an exception mechanism agreed upon between the Java Card platform and the at least one applet.

6. The embedded device (D) according to any of claims 1 to 5, wherein said communication channel (CH) is constructed as either one of: (1) a unidirectional communication channel from the Java Card platform to the at least one applet; (2) a unidirectional communication channel from the at least one applet to the Java Card platform; (3) a bidirectional communication channel between the Java Card platform and the at least one applet.

7. The embedded device (D) according to any of claims 1 to 4, wherein the threat information (TI) exchanged between the Java Card platform and the at least one applet comprises a threat type information indicating a type of the detected event of threat (ET).

8. The embedded device (D) according to claim 7, wherein the threat type information is or comprises one or several of: a light flash attack (ATT) detected at the Java Card platform, a data integrity error (DAT INT ERR) detected at the at least one applet or at the Java Card platform, a bytecode jump detected at the at least one applet, an execution flow control error detected at the at least one the applet or at the Java Card platform.

9. The embedded device (D) according to any of claims 1 to 8, wherein the threat information (TI) exchanged between the Java Card platform and the at least one applet comprises or is accompanied by at least one command (CO) including instructions to establish or change security features, the command being
- either a command from the Java Card platform to the at least one applet, and including instructions to establish or change applet security features,
- or a command from the at least one the applet to the Java Card platform, and including instructions to establish or change Java Card platform security features.

## Patentansprüche

1. Eine eingebettete Vorrichtung (D) mit Java-Kartentechnologie, die eine Java-Kartenplattform und mindestens ein Applet beinhaltet, und die sowohl Java-Kartenplattform-Sicherheitsmerkmale als auch Applet-Sicherheitsmerkmale beinhaltet, umfassend:
a) eine Bedrohungserkennungseinrichtung (DET), die mit einer von beiden oder sowohl mit der Java-Kartenplattform und dem mindestens einen Applet installiert ist und ausgebildet ist auf der eingebetteten Vorrichtung (D) auftretende Bedrohungsereignisse (ET) zu erkennen; und **gekennzeichnet durch**
b) eine Schnittstelleneinrichtung (IM) die ausgebildet ist, um:
- von der Bedrohungserkennungseinrichtung (DET) eine Bedrohungsbenachrichtigung (NOT) zu einem erkannten Bedrohungsereignis (ET) zu erhalten; und
- als Reaktion auf eine erhaltene Bedrohungsbenachrichtigung (NOT) einen Kommunikationskanal (CH) zwischen der Java-Kartenplattform und dem mindestens einen Applet zu errichten oder zu betreiben und Bedrohungsinformationen (TI) über das erkannte Bedrohungsereignis (ET) zwischen der Java-Kartenplattform und dem mindestens einen Applet auszutauschen.

2. Die eingebettete Vorrichtung (D) nach Anspruch 1, wobei die Schnittstelleneinrichtung (IM) eine Applikationsprogrammierungsschnittstelle API ist.

3. Die eingebettete Vorrichtung (D) nach Anspruch 2, wobei die Applikationsprogrammierungsschnittstelle API eine proprietäre, speziell für Bedrohungsereignisse errichtete API ist.

4. Die eingebettete Vorrichtung (D) nach Anspruch 2, wobei die Applikationsprogrammierungsschnittstelle API eine Standard-API zusammen mit bestimmten Parameterwerten ist, die Bedrohungsereignisse anzeigen.

5. Die eingebettete Vorrichtung (D) nach Anspruch 1, wobei die Schnittstelleneinrichtung (IM) ein Ausnahmemechanismus ist, der zwischen der Java-Kartenplattform und dem mindestens einen Applet vereinbart wird.

6. Die eingebettete Vorrichtung (D) nach einem der Ansprüche 1 bis 5, wobei der Kommunikationskanal (CH) als einer der Folgenden ausgebildet ist: (1) ein unidirektionaler Kommunikationskanal von der Java-Kartenplattform zu dem mindestens einen Applet; (2) ein unidirektionaler Kommunikationskanal von dem mindestens einen Applet zu der Java-Kartenplattform; (3) ein bidirektionaler Kommunikationskanal zwischen der Java-Kartenplattform und dem mindestens einen Applet.

7. Die eingebettete Vorrichtung (D) nach einem der Ansprüche 1 bis 4, wobei die zwischen der Java-Kartenplattform und dem mindestens einen Applet ausgetauschte Bedrohungsinformation (TI) eine Bedrohungsartinformation umfasst, die eine Art des erkannten Bedrohungsereignisses anzeigt.

8. Die eingebettete Vorrichtung (D) nach Anspruch 7, wobei die Bedrohungsartinformation eine oder mehrere der Folgenden ist oder umfasst: ein auf der Java-Kartenplattform erkannter Lichtblitzangriff (ATT), ein auf dem mindestens einen Applet oder der Java-Kartenplattform erkannter Datenintegritätsfehler (DAT INT ERR), ein auf dem mindestens einen Applet erkannter Bytecode-Sprung, ein auf dem mindestens einen Applet oder auf der Java-Kartenplattform erkannter Ausführungsflusssteuerungsfehler.

9. Die eingebettete Vorrichtung (D) nach einem der Ansprüche 1 bis 8, wobei die zwischen der Java-Kartenplattform und dem mindestens einen Applet ausgetauschte Bedrohungsinformation (TI) mindestens einen Befehl (CO) umfasst oder von diesem begleitet wird, der Anweisungen beinhaltet, um Sicherheitsmerkmale einzurichten oder zu ändern, wobei der Befehl
- entweder ein Befehl von der Java-Kartenplattform an das mindestens eine Applet ist und Anweisungen beinhaltet, um die Applet-Sicherheitsmerkmale einzurichten oder zu ändern,
- oder ein Befehl von dem mindestens einen Applet an die Java-Kartenplattform ist und Anweisungen beinhaltet, um die Java-Kartenplattform-Sicherheitsmerkmale einzurichten oder zu ändern.

## Revendications

1. Dispositif embarqué (D) intégrant une technologie de carte Java incluant une plate-forme de carte Java et au moins un applet, et incluant à la fois des fonctionnalités de sécurité de plate-forme de carte Java et des fonctionnalités de sécurité d'applet, comprenant :
a) un moyen de détection de menace (DET), installé avec l'un ou l'autre, ou les deux éléments, parmi la plate-forme de carte Java et le au moins un applet, et construit pour détecter des événements de menace (ET) se produisant sur le dispositif embarqué (D), et **caractérisé par** :
b) un moyen d'interface (IM) construit pour :
- recevoir, à partir du moyen de détection de menace (DET), une notification de menace (NOT) sur un événement détecté de menace (ET), et
- en réaction à une notification de menace reçue (NOT), établir ou faire fonctionner un canal de communication (CH) entre la plate-forme de carte Java et le au moins un applet, et échanger des informations de menace (TI) quant à l'événement détecté de menace (ET) entre la plate-forme de carte Java et le au moins un applet.

2. Dispositif embarqué (D) selon la revendication 1, dans lequel ledit moyen d'interface (IM) est une interface de programmation d'application (API, Application Programming Interface).

3. Dispositif embarqué (D) selon la revendication 2, dans lequel ladite interface de programmation d'application API est une API propriétaire établie spécialement pour des événements de menace.

4. Dispositif embarqué (D) selon la revendication 2, dans lequel ladite interface de programmation d'application API est une API standard en combinaison avec des valeurs de paramètres spécifiques indiquant des événements de menace.

5. Dispositif embarqué (D) selon la revendication 1, dans lequel ledit moyen d'interface (IM) est un mécanisme d'exception convenu entre la plate-forme de carte Java et le au moins un applet.

6. Dispositif embarqué (D) selon l'une quelconque des revendications 1 à 5, dans lequel ledit canal de communication (CH) est construit sous la forme de l'un ou l'autre des éléments suivants :
(1) un canal de communication unidirectionnel allant de la plate-forme de carte Java au au moins un applet ;
(2) un canal de communication unidirectionnel allant du au au moins un applet à la plate-forme de carte Java, et
(3) un canal de communication bidirectionnel allant de la plate-forme de carte Java au au moins un applet.

7. Dispositif embarqué (D) selon l'une quelconque des revendications 1 à 4, dans lequel les informations de menace (TI) échangées entre la plate-forme de carte Java et le au moins un applet comprennent des informations de type menace indiquant un type de l'événement détecté de menace (ET).

8. Dispositif embarqué (D) selon la revendication 7, dans lequel les informations de type menace sont ou comprennent au moins un ou plusieurs des éléments suivants : une attaque par flash lumineux (ATT) détectée sur la plate-forme de carte Java, une erreur d'intégrité de données (DAT INT ERR) détectée sur le au moins un applet ou la plate-forme de carte Java, un saut de code à octets détecté sur le au moins un applet, une erreur de contrôle de flux d'exécution détectée sur le au moins un applet ou sur la plate-forme de carte Java.

9. Dispositif embarqué (D) selon l'une quelconque des revendications 1 à 8, dans lequel les informations de menace (TI) échangées entre la plate-forme de carte Java et le au moins un applet comprennent ou sont accompagnées par au moins une commande (CO) incluant des instructions pour établir ou modifier des fonctionnalités de sécurité, la commande étant :
- soit une commande de la plate-forme de carte Java vers le au moins un applet, et incluant des instructions pour établir ou modifier des fonctionnalités de sécurité d'applet,
- soit une commande du au moins un applet vers la plate-forme de carte Java, et incluant des instructions pour établir ou modifier des fonctionnalités de sécurité plate-forme de carte Java.
